# EUROPÄISCHE PATENTSCHRIFT

(11) **EP 3 762 553 B1**
(45) Veröffentlichungstag und Bekanntmachung des Hinweises auf die Patenterteilung: **06.04.2022**
(21) Anmeldenummer: 19704579.2
(22) Anmeldetag: 06.02.2019
(51) Int. Cl.: E02F 9/20, E02F 9/22, B60L 1/00, B60L 15/20

(54) **ANTRIEB FÜR EINE ARBEITSMASCHINE**
DRIVE FOR A MACHINE
ENTRAÎNEMENT POUR UNE MACHINE DE TRAVAIL

(30) Priorität: 09.03.2018 DE 102018203623
(43) Veröffentlichungstag der Anmeldung: 13.01.2021
(73) Patentinhaber: ZF Friedrichshafen AG, 88046 Friedrichshafen (DE)
(72) Erfinder: LEGNER, Jürgen, 88048 Friedrichshafen (DE)
(86) Internationale Anmeldenummer: PCT/EP2019/052821
(87) Internationale Veröffentlichungsnummer: WO 2019/170343

(56) Entgegenhaltungen:
- JP-A- 2006 205 777
- JP-A- 2015 063 271
- US-A1- 2013 304 292

## Beschreibung

Die Erfindung bezieht sich auf einen Antrieb einer Arbeitsmaschine wie beispielsweise ein Radlader nach der im Oberbegriff von Anspruch 1 näher definierten Art. Gattungsgemäße Antriebe weisen einen elektrischen Motor auf, welcher die Fahrzeugräder antreibt.

Die US 2015/0197239 A1 und die EP 31 30 708 A1 offenbaren einen Radlader mit einem elektrischen Motor zum Antrieb der Fahrzeugräder.

Die JP-A-2006-205777 offenbart eine Arbeitsmaschine mit einem ersten elektrischen Motor zum Antrieb der Fahrzeugräder und mit einem zweiten elektrischen Motor zum Antrieb der Arbeitsausrüstung.

Der vorliegenden Erfindung liegt die Aufgabe zugrunde, den Antrieb für eine Arbeitsmaschine mit einem elektrischen Motor zum Antrieb der Fahrzeugräder weiter zu verbessern.

Die Aufgabe wird mit einem auch die kennzeichnenden Merkmale des Hauptanspruchs aufweisenden gattungsgemäßen Antrieb gelöst.

Erfindungsgemäß weist der Antrieb eine Recheneinheit auf, welche Signale von einem Fahrpedal empfangen kann und welche einen ersten elektrischen Motor zum Antrieb der Fahrzeugräder ansteuert. Des Weiteren steuert die Recheneinheit einen weiteren Motor an, welcher geeignet ist zum Antrieb einer Arbeitsausrüstung, beispielsweise durch den Antrieb einer hydraulischen Pumpe. Es besteht die Möglichkeit, dass dieser weitere Motor ein zweiter elektrischer Motor ist. Es besteht jedoch auch die Möglichkeit, dass dieser weitere Motor ein Motor anderer Bauart ist. Im Weiteren wird zur Vereinfachung jedoch ausschließlich der Begriff zweiter elektrischer Motor verwendet.

Mittels der Recheneinheit ist der erste elektrische Motor zum Antrieb der Fahrzeugräder und der zweite elektrische Motor zum Antrieb der Arbeitsausrüstung getrennt voneinander ansteuerbar.

Dadurch besteht die Möglichkeit, eine Arbeitsmaschine wie beispielsweise einen Radlader so anzusteuern, dass dieser ein gleichartiges Fahrverhalten aufweist wie heutige dieselmotorisch angetriebene Radlader. Dadurch besteht die Möglichkeit, eine rein elektrische Arbeitsmaschine zu verwenden, ohne dass sich der Fahrer einer dieselmotorisch angetriebenen Arbeitsmaschine umgewöhnen muss.

Die Arbeitsmaschine kann die Energie aus einer Batterie beziehen. Es besteht jedoch auch die Möglichkeit, dass die Arbeitsmaschine über eine Brennstoffzelle oder andere elektrische Energiequellen wie beispielsweise einen Anschluss an ein Netzwerk mittels eines Kabels aufweist. Dadurch besteht die Möglichkeit, die Arbeitsmaschine rein elektrisch zu betreiben.

In der Fahrerkabine des Radladers ist ein Fahrpedal angeordnet, welches ein Signal an die Recheneinheit ausgibt. Bei nichtbetätigtem Fahrpedal besteht die Möglichkeit, ein Signal mit 0% auszugeben, bei vollbetätigtem Fahrpedal besteht die Möglichkeit, ein Signal mit 100% auszugeben. Des Weiteren ist ein Bremspedal angeordnet, um das Fahrzeug zu bremsen. Das Bremspedal gibt ebenso ein Signal an die Recheneinheit aus. Im ersten Pedalhub oder Weg des Bremspedals gibt das Bremspedal ein Signal aus, um das Fahrzeug mittels der Betriebsbremse noch nicht zu bremsen, sondern ein sogenannter Inchbetrieb soll aktiviert werden. Im Inchbetrieb soll die Leistung und somit auch die Drehzahl des Motors zum Antrieb der Arbeitsausrüstung erhöht sein und die Leistung und somit auch das Drehmoment an den Fahrzeugrädern reduziert sein. Des Weiteren weist der Radlader einen Multifunktionshebel auf, mittels welchem die Bedienung der Arbeitsausrüstung, wie beispielsweise des Hubgerüsts oder Hubwerk und der Schaufel möglich ist sowie die Fahrtrichtung festgelegt werden kann und ein Fahrbereich, beispielsweise ein schneller Fahrbereich und ein langsamer Fahrbereich wählbar ist. Das Fahrzeug weist weiterhin einen Neutralschalter und eine Parkbremsbetätigung auf. Der Multifunktionshebel steht vorzugsweise ebenfalls mit der Recheneinheit in Verbindung.

Um die elektrische Arbeitsmaschine im Verhalten wie eine dieselmotorische Arbeitsmaschine auszubilden, soll der erste elektrische Motor in Abhängigkeit des Signals der Position des Fahrpedals ansteuerbar sein. Hierfür weist das Fahrpedal einen analogen Sensor auf, welcher die Position des Fahrpedals erfasst und als Vorgabe für die Drehzahl und das Drehmoment des ersten elektrischen Motors verwendet wird. Hierbei ist eine Speichereinheit vorhanden, in welcher ein Kennfeld mit Kennlinien abgelegt ist, in welcher das Drehmoment des ersten elektrischen Motors und die Drehzahl des ersten elektrischen Motors zu einer Vielzahl von Pedalpositionen des Fahrpedals abgelegt sind. Die Kennlinien sind so ausgestaltet, dass bei stillstehendem ersten elektrischen Motor sich das Drehmoment in Abhängigkeit der Pedalposition verändert. Dies ist beispielsweise dadurch möglich, dass das maximale Drehmoment dem maximal betätigten Fahrpedal entspricht und kein Drehmoment einem nichtbetätigten Fahrpedal entspricht. Nun kann das Drehmoment linear der Veränderung des Fahrpedals zugeordnet werden, indem jeweils eine Position des Fahrpedals von mehreren Positionen des Fahrpedals jeweils einer Kennlinie zugeordnet wird.

Dadurch ist es möglich, dem Radlader ein Fahrverhalten zu ermöglichen, bei welchem der Radlader zum Befüllen der Schaufel bis zu seiner Traktionsgrenze der Räder durch Veränderung der Position des Fahrpedals gebracht werden kann.

Ebenso ist es notwendig, dass die Kennlinie, welcher eine Fahrpedalposition zugeordnet ist, eine definierte Maximaldrehzahl aufweist, welche bei keinem Drehmoment erreichbar ist. Dadurch ist es möglich, mittels des Fahrpedals die Geschwindigkeit auch dann zu halten, wenn sich das Fahrzeug in so einem Gelände bewegt, bei welchem das Fahrzeug kein Drehmoment benötigt.

Befindet sich das Fahrzeug im Schubbetrieb, wird vorteilhaft ein begrenztes Drehmoment vorgegeben, um für den Fahrer ein bekanntes Ausroll- oder Bremsverhalten abzubilden. Da bei heutigen verbrennungsmotorischen Antrieben das Bremsmoment deutlich kleiner ist als das Antriebsmoment, sollte der Antrieb und somit die erste elektrische Maschine immer dann in den Schubbetrieb überführt werden, wenn bei entsprechender Pedalstellung des Fahrpedals die maximale Drehzahl bei Drehmoment 0 überschritten wird. Das Bremsdrehmoment soll dann mit steigender Drehzahl in einem Gradienten bis auf ein definiertes Niveau ansteigen und auch bei weiter steigender Drehzahl nahezu konstant bleiben. Das maximale Bremsmoment wird hierbei vorzugsweise unabhängig von der Pedalstellung des Fahrpedals vorgegeben. Es besteht auch die Möglichkeit, mit geringerer Pedalbetätigung des Fahrpedals das Bremsmoment zu erhöhen und bei starker Pedalbetätigung des Fahrpedals das Bremsmoment geringer vorzugeben.

Weist das Fahrzeug einen Wahlschalter für einen schnellen Fahrbereich und einen langsamen Fahrbereich, beispielsweise im Multifunktionshebel auf, so ist im schnellen Fahrbereich die maximale Drehzahl des ersten elektrischen Motors erst bei sehr hoher, nämlich der technisch sinnvollen maximalen Drehzahl, begrenzt. Bei Wahl des langsamen Fahrbereichs wird die Drehzahl in Abhängigkeit der Position des Fahrpedals deutlich früher begrenzt. Hierfür wird die Fahrpedalstellung 0 bis 100% auf einen Drehzahlbereich des ersten elektrischen Motors aufgeteilt, wobei die maximale Drehzahl im langsamen Fahrbereich beispielsweise einem Drittel der maximalen Drehzahl des schnellen Fahrbereichs entsprechen kann.

Um im Inchbetrieb das Fahrzeug optimal zu nutzen, weist das Fahrzeug neben dem Fahrpedal ein Bremspedal auf. Im Inchbetrieb wird die Leistung vom ersten elektrischen Motor reduziert und die Leistung des zweiten elektrischen Motors erhöht. Das Bremspedal kann hierfür einen analogen Sensor aufweisen, welcher in Abhängigkeit der Position des Bremspedals ein Signal ausgibt. Dieses Signal wird als Vorgabe für die Reduzierung der Drehzahl und des Drehmomentes des ersten elektrischen Motors für den Fahrbetrieb verwendet. Im ersten Teil der Bremspedalbetätigung wird die Betriebsbremse nicht aktiviert. Das Sensorsignal wird in diesem Teil für den Inchbetrieb somit die Reduzierung der Drehzahl und des Drehmoments des ersten elektrischen Motors und der Erhöhung der Leistung des zweiten elektrischen Motors verwendet.

Wird das Bremspedal weiter durchgedrückt, wird zusätzlich die Betriebsbremse betätigt.

In einer weiteren Ausgestaltungsform wird der zweite elektrische Motor, welcher die Betätigung der Arbeitsausrüstung antreibt, in Abhängigkeit des Signals des Fahrpedals angesteuert. Es besteht die Möglichkeit, den zweiten elektrischen Motor nicht nur in Abhängigkeit des Fahrpedalsignals, sondern auch in Abhängigkeit der Drehzahl des ersten elektrischen Motors anzusteuern. Die Arbeitsausrüstung kann beispielsweise die Hub- und Schaufelbewegung sein, welche mit einem Multifunktionshebel aktiviert werden kann.

Es besteht die Möglichkeit, mit dem zweiten elektrischen Motor Hydraulikpumpen anzutreiben, deren Druckmittel auf Zylinder der Arbeitsausrüstung wirken. Diese Hydraulikpumpen können als Konstantpumpen, somit Pumpen mit konstantem Verdrängungsvolumen, ausgebildet sein, es besteht jedoch auch die Möglichkeit, Pumpen mit verstellbarem Verdrängungsvolumen zu verwenden. Bei Verwendung von Pumpen mit verstellbaren Verdrängungsvolumen kann eine Load-Sensing Regelung verwendet werden. Bei Verwendung von Pumpen mit konstantem Verdrängungsvolumen bestimmt die Drehzahl des zweiten Elektromotors das Fördervolumen. Der zweite elektrische Motor soll so angesteuert werden, dass ohne Betätigung des Fahrpedals der zweite elektrische Motor eine Mindestdrehzahl aufweist, wodurch ein Mindestvolumenstrom förderbar ist, um auch im Stillstand des Fahrzeugs Lenkbewegungen ausführen zu können. Die Pumpe, welche mit dem zweiten elektrischen Motor verbunden ist, fördert hierbei Druckmittel zu einem Lenkventil, welches Aktuatoren für die Lenkung mit Druckmittel beaufschlagt.

Wird das Fahrpedal betätigt, wird über eine Kennlinie, welche in einer Speichereinheit gespeichert ist, eine Drehzahlvorgabe für den ersten elektrischen Motor ausgegeben. Je mehr das Fahrpedal betätigt wird, umso höher soll die Drehzahl des ersten elektrischen Motors sein. Die Drehzahl des zweiten elektrischen Motors wird in Abhängigkeit der Drehzahl des ersten elektrischen Motors begrenzt. Bei kleiner Drehzahl des ersten elektrischen Motors muss die Drehzahl des zweiten elektrischen Motors bis zur Maximaldrehzahl möglich sein. Bei höherer Drehzahl des ersten elektrischen Motors kann die Drehzahl des zweiten elektrischen Motors reduziert werden, da hierbei das Fahrzeug eine höhere Geschwindigkeit aufweist und somit die Arbeitsausrüstung, beispielsweise die Hub- oder Schaufelhydraulik, nicht schnell bewegt werden muss. Eine Mindestdrehzahl für die Lenkung des Fahrzeugs muss jedoch erhalten bleiben, weshalb die Drehzahl des zweiten elektrischen Motors nicht unter eine Mindestdrehzahl absinken darf. Durch die Begrenzung der Drehzahl des zweiten elektrischen Motors wird der Wirkungsgrad verbessert.

Vorzugsweise werden Pumpen mit konstantem Fördervolumen, welche vom zweiten elektrischen Motor angetrieben werden, für Arbeitsmaschinen mit geringerer Leistung verwendet. Arbeitsmaschinen mit größeren Leistungen verwenden verstellbare Pumpen, welche vorzugsweise in Kombination mit einem Load Sensing System verwendet werden. Bei dem Load Sensing System wird bei mehreren Verbrauchern der jeweilig höchste Lastdruck und der Pumpendruck einer Drucklage für die Verstellung der Pumpe verwendet. Die Pumpe fördert immer nur so viel, wie die angesteuerten Verbraucher in Summe benötigen. Der Pumpendruck entspricht immer dem lasthöchsten Verbraucher. Wird kein Verbraucher angesteuert, so fördert die Pumpe nur den Leckölstrom.

In einer weiteren Ausgestaltungsform weist diese in ihrem Hubvolumen verstellbare Pumpe einen Sensor auf, mittels welchem das aktuelle Fördervolumen der Pumpe erfassbar ist. Dieses Signal wird für die Drehzahlvorgabe des zweiten elektrischen Motors verwendet. Hierbei wird das Sensorsignal kalibriert und interpretiert. Das Signal kann Werte zwischen 0% und 100% annehmen. Die Drehzahl des zweiten elektrischen Motors lässt sich nun in Abhängigkeit des Signals des Sensors an den entsprechenden Bedarf anpassen. Wird keine Arbeitsfunktion betätigt, beispielsweise die Zylinder des Hubwerk nicht angesteuert, so beträgt das Sensorsignal der verstellbaren Pumpe nahezu 0. In diesem Zustand wird die Drehzahlvorgabe für den zweiten elektrischen Motor auf einen unteren Grenzwert gesteuert. Wird nun der Verbraucher angesteuert, beispielsweise das Hubwerk betätigt, so meldet das Load Sensing System der Arbeitspumpe einen Förderbedarf und die Arbeitspumpe wird ihre Fördermenge erhöhen und das Sensorsignal wird ansteigen. Mit dem Begriff Arbeitspumpe wird hierbei die verstellbare Pumpe bezeichnet, welche mit dem zweiten elektrischen Motor verbunden ist. Steigt die zur Verfügung stehende Fördermenge der Arbeitspumpe über das notwendige Maß an, wird dies durch ein fallendes Sensorsignal der Arbeitspumpe erkannt. Eine weitere Drehzahlerhöhung ist nicht sinnvoll. Deshalb wird der zweite elektrische Motor so angesteuert, dass dieser seine Drehzahl nicht mehr erhöht. Über einen Regelalgorithmus wird bei Unterschreitung des Schwellenwerts die Drehzahlvorgabe für den zweiten elektrischen Motor bis zum unteren Grenzwert reduziert. Der untere Grenzwert wird durch einen Mindestvolumenstrom, beispielsweise für die Lenkung, definiert. Um die Drehzahlvorgabe für den zweiten elektrischen Motor zu stabilisieren, ist hierbei eine Hysterese zwischen steigendem und fallendem Sensorsignal vorhanden.

Zusätzlich kann die Änderung des Sensorsignals über der Zeit für die Drehzahlvorgabe des zweiten elektrischen Motors verwendet werden. Ein stark steigendes oder fallendes Signal kann die Dynamik der Drehzahlvorgabe beeinflussen.

In einer weiteren Ausgestaltungsform befinden sich Sensoren an der Arbeitsausrüstung, beispielsweise dem Hubwerk und der Schaufel. Es besteht auch die Möglichkeit, durch einen oder mehrere Sensoren im Multifunktionshebel, mittels welchem das Hubwerk ansteuerbar ist, eine Betätigung des Hubwerks oder der Schaufel zu detektieren. In Abhängigkeit der Betätigung des Hubwerks wird die Drehzahl des zweiten elektrischen Motors entsprechend dem Bedarf anpassen.

Hierbei kann die Abhängigkeit der Drehzahlvorgabe des zweiten elektrischen Motors zur Fahrpedalstellung und zur Drehzahl des ersten elektrischen Motors bestehen bleiben. Dieser Abhängigkeit wird die Sensorinformation, welche eine Betätigung des Hubwerks und der Schaufel somit der Arbeitsausrüstung detektiert, überlagert.

Die Sensoren im Multifunktionshebel oder im Hubwerk und der Schaufel erzeugen entsprechend der Betätigung des Hubwerks und der Schaufel ein proportionales Signal. Diese Sensorsignale werden kalibriert und interpretiert. Beide Signale können Werte zwischen -100% und +100% annehmen. Für die Hubbewegung wird das Sensorsignal für maximales Absenken auf -100% und für maximales Anheben auf +100% kalibriert. Für die Schaufelbewegung bedeutet ein Sensorsignal von -100% ein maximales Auskippen der Schaufel und +100% ein maximales Einkippen der Schaufel. Wird der Multifunktionshebel nicht betätigt, also keine Bewegung für den Hub und die Schaufel angefordert, so liefern die Sensoren jeweils ein Signal von 0%. Die Drehzahlvorgabe für den zweiten elektrischen Motor soll jeweils der größte Betrag der beiden Sensorsignale verwenden. Ist das Signal der Sensoren 0%, ist keine Betätigung der Arbeitsfunktion vorgesehen, wodurch die Drehzahlvorgabe für den zweiten elektrischen Motor auf einen unteren Grenzwert gesteuert wird. Erkennt nun der Sensor, dass das Hubwerk bewegt werden soll, wird die Drehzahl des zweiten elektrischen Motors in Abhängigkeit des Signals des Sensors erhöht.

Um den ersten elektrischen Motor und den zweiten elektrischen Motor anzusteuern, weist der erste elektrische Motor und der zweite elektrische Motor jeweils eine Leistungselektronik auf, welche unmittelbar benachbart zum ersten elektrischen Motor und zweiten elektrischen Motor angeordnet sein kann. Es besteht auch die Möglichkeit die Leistungselektronik an einem anderen Ort anzuordnen. Die Leistungselektronik des ersten elektrischen Motors und die Leistungselektronik des zweiten elektrischen Motors sind über ein CAN-Bussystem mit einem Fahrzeugrechner, auch Recheneinheit genannt, verbunden. Es besteht die Möglichkeit, dass zusätzlich über den CAN auch ein Display verbunden ist. Der Fahrzeugrechner erhält Signale von einem Bremspedal, einem Fahrpedal, einem Schalter für die Parkbremse und einem Schalter für die Fahrtrichtung, einem Schalter für die Fahrgeschwindigkeit zwischen einer schnellen und einer langsamen Fahrgeschwindigkeit und einem Schalter für eine Neutralposition. Bei Verwendung von verstellbaren Arbeitspumpen, welche mit dem zweiten elektrischen Motor verbunden sind, kann der Fahrzeugrechner auch ein Signal eines Sensors über die Stellung des Hubvolumens der Arbeitspumpe erhalten.

Die Energieversorgung erfolgt über eine Batterie. Es besteht jedoch auch die Möglichkeit, die Energieversorgung über einen Verbrennungsmotor, welcher einen Generator antreibt, auszubilden und es besteht die Möglichkeit, mittels eines Anschlusses an ein stationäres Stromnetz das Fahrzeug mit Energie zu versorgen. Es besteht auch die Möglichkeit, dass eine Kombination dieser Energieversorgungen vorhanden ist.

Die Recheneinheit gibt entsprechend der Betriebsstrategie Sollwerte für die Drehzahl und das maximale Drehmoment an die Leistungselektronik des ersten elektrischen Motors und an die Leistungselektronik des zweiten elektrischen Motors. Die Leistungselektroniken selbst regeln die beiden elektrischen Motoren entsprechend den Vorgaben. Die Istwerte der Drehzahl und des Drehmoments sowie die Betriebszustände der beiden elektrischen Motoren werden an die Recheneinheit zurückgemeldet. Dadurch können Standardleistungselektroniken verwendet werden, die nur so viel Rechenleistung besitzen, dass diese die elektrischen Motoren betreiben können. Die Recheneinheit benötigt keine zusätzlichen Ausgänge, sondern nur Eingänge und die Kommunikation über den CAN. Dies ist sehr kostengünstig.

Weitere Merkmale sind der Figurenbeschreibung zu entnehmen.

Es zeigen:

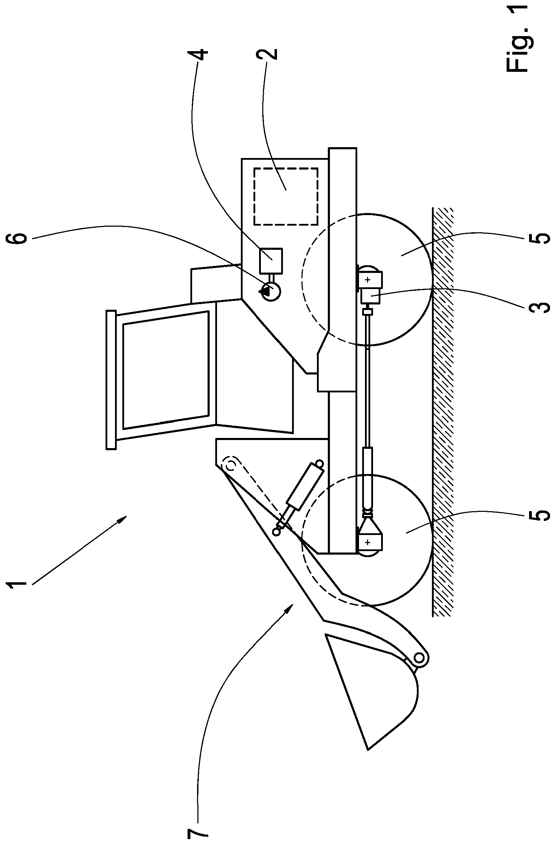

- Fig. 1: einen Radlader
- Fig. 2: ein Schaubild des Antriebs des Radladers,
- Fig. 3: ein Kennfeld zur Ansteuerung des ersten elektrischen Motors für einen schnellen Fahrbereich,
- Fig. 4: ein Kennfeld zur Ansteuerung des ersten elektrischen Motors für einen langsamen Fahrbereich,
- Fig. 5: eine Kennlinie bei Betätigen des Bremspedals,
- Fig. 6: eine Kennlinie zur Ansteuerung der Drehzahl des zweiten elektrischen Motors,
- Fig. 7: eine Kennlinie zur Ansteuerung des zweiten elektrischen Motors,
- Fig. 8: eine Kennlinie zur Ansteuerung des zweiten elektrischen Motors und
- Fig. 9: eine Kennlinie zur Ansteuerung des zweiten elektrischen Motors in Abhängigkeit des Signals des Fahrpedals und des Multifunktionshebels.

Fig. 1:
Ein Radlader 1 weist eine Batterie 2 auf, welche die Energie für den ersten elektrischen Motor 3 und den zweiten elektrischen Motor 4 bereitstellt. Der erste elektrische Motor 3 treibt die Fahrzeugräder 5 an. Es besteht die Möglichkeit, statt einem ersten elektrischen Motor 3 auch mehrere elektrische Motoren zu verwenden. Der zweite elektrische Motor 4 treibt eine Pumpe 6 an, welche auch Arbeitspumpe genannt wird und die Zylinder des Hubwerks 7 und die Lenkung des Radladers 1 mit Druckmittel versorgt. Die Pumpe 6 kann bei Fahrzeugen mit kleinerer Leistung als Pumpe mit konstantem Hubvolumen ausgeführt sein, hierbei können auch mehrere Konstantpumpen verwendet werden. Bei Fahrzeugen mit größerer Leistung besteht auch die Möglichkeit, die Pumpe 6 als eine oder mehrere Pumpen mit verstellbarem Fördervolumen auszubilden. Diese Pumpen mit verstellbarem Fördervolumen sind häufig als Load Sensing-Pumpen ausgeführt.

Fig. 2:
Die Energie der Batterie 2 wird über die Leistungselektronik 8 dem ersten elektrischen Motor 3 zugeführt. Die Energie der Batterie 2 wird über die Leistungselektronik 9 dem zweiten elektrischen Motor 4 zugeführt. Der zweite elektrische Motor 4 treibt die Pumpe 6 an, welche in ihrem Hubvolumen verstellbar ausgeführt ist. Der erste Motor 3 treibt nicht dargestellte Fahrzeugräder an. Über Ventile 10 sind Aktuatoren 11 der Arbeitsausrüstung oder der Lenkung ansteuerbar. Um das aktuelle Hubvolumen der Pumpe 6 zu detektieren, ist ein Sensor 12 mit der Pumpe 6 verbunden. Über Leitungen 13, beispielsweise mittels CAN, ist die Batterie 2, die Leistungselektronik 8, die Leistungselektronik 9, der Sensor 12 und ein Display 14, an welchem die Fahrtrichtung, die Geschwindigkeit, der Fahrbereich und weitere Fahrzeugzustände angezeigt werden, mit einer Recheneinheit 15, welche auch Fahrzeugrechner genannt wird, verbunden. Die Recheneinheit 15 erhält Signale von einem Sensor des Bremspedals 16, einem Sensor des Fahrpedals 17, einem Schalter für die Parkbremse 18 und mehreren Schaltern und/oder Sensoren in einem Multifunktionshebel 19, mittels welchem der Geschwindigkeitsfahrbereich eine Neutralfunktion und weitere Funktionen, wie beispielsweise die Betätigung der Aktoren 11 der Arbeitsausrüstung, beispielsweise der Schaufel oder des Hubwerks, ansteuerbar sind. Es besteht die Möglichkeit, die Funktionen des Multifunktionshebels 19 in einem Hebel auszubilden. Es ist jedoch auch möglich, die einzelnen Sensoren und Schalter in mehreren Schaltern und Hebeln auszubilden.

Wird beispielsweise das Fahrpedal 17 betätigt, so erzeugt die Recheneinheit 15 ein Signal für den ersten elektrischen Motor 3. In der Recheneinheit 15 ist auch eine Speichereinheit enthalten, innerhalb welcher die Kennlinien, welche in den weiteren Figuren beschrieben sind, abgespeichert sind. Anhand der Signale, welche die Recheneinheit 15 erhält, und der abgespeicherten Kennlinien errechnet die Recheneinheit 15 ein Vorsignal, welches die Recheneinheit 15 über die Leitung 13 ausgibt. Dadurch ist es möglich, die Leistungselektronik 8 und die Leistungselektronik 9 so auszubilden, dass diese nur den ersten elektrischen Motor 3 und den zweiten elektrischen Motor 4 ansteuern können müssen.

Bei Verwendung der Pumpe 6 als Load Sensing-Pumpe besteht die Möglichkeit, mittels eines Sensors die Vestellung des Hubvolumens der Pumpe 6 zu ermitteln.

Bei einem Load Sensing System wird bei mehreren Verbrauchern der jeweils höchste Lastdruck und der Pumpendruck einer Druckwaage für die Verstellung der Pumpe verwendet. Die Pumpe fördert immer nur so viel, wie die angesteuerten Verbraucher in Summe benötigen. Der Pumpendruck entspricht immer dem lasthöchsten Verbraucher. Wird kein Verbraucher angesteuert, so fördert die Pumpe 6 nur den Leckölstrom.

Mit dem Sensor an der Verstellung der Pumpe 6 lässt sich das aktuelle Fördervolumen der Pumpe erfassen. Dieses Signal wird nun für die Drehzahlvorgabe des zweiten elektrischen Motors 3 verwendet. Das Sensorsignal wird kalibriert und interpretiert. Das Signal kann Werte zwischen 0% bis 100% annehmen. Durch die Verwendung dieses Sensors an der Verstellung der Pumpe 6 lässt sich die Drehzahl des zweiten elektrischen Motors 4 und somit die Drehzahl der Pumpe 6 entsprechend dem Bedarf anpassen und damit effizienter gestalten.

Findet keine Betätigung der Arbeitsausrüstung 11 statt, wird das Sensorsignal der Verstellung der Pumpe 6 nahezu 0% betragen. In diesem Zustand wird die Drehzahlvorgabe für den zweiten elektrischen Motor 4 auf einen unteren Grenzwert gesteuert. Wird nun ein Verbraucher, somit die Arbeitsausrüstung 11 angesteuert, meldet das Load Sensing System der Pumpe 6 einen Förderbedarf und die Pumpe 6 wird ihre Fördermenge erhöhen und das Sensorsignal wird ansteigen. Für die Drehzahlvorgabe des zweiten elektrischen Motors 4 wird ein Schwellwert für das Sensorsignal definiert, bei dem die Pumpe 6 nahezu vollkommen ausgeschwenkt ist, beispielsweise 95%. Wird dieser Schwellenwert überschritten, wird dies als unzureichende Fördermenge interpretiert und deshalb die Drehzahlvorgabe für den Arbeitsantrieb bis zum Maximalwert erhöht.

Steigt die zur Verfügung stehende Fördermenge über das notwendige Maß an, wird dies durch ein fallendes Sensorsignal der Arbeitspumpe erkannt. Eine weitere Drehzahlerhöhung ist nicht sinnvoll. Über einen Regelalgorithmus wird bei Unterschreitung des Schwellenwerts die Drehzahlvorgabe für den zweiten elektrischen Motor 4 bis zum unteren Grenzwert reduziert.

Zusätzlich wird eine Hysterese zur Stabilisierung der Drehzahlvorgabe um diesen Schwellenwert verwendet.

Es besteht auch die Möglichkeit, die Änderung des Sensorsignals über der Zeit für die Drehzahlvorgabe des zweiten elektrischen Motors 4 zu verwenden. Ein stark steigendes oder fallendes Signal kann die Dynamik der Drehzahlvorgabe beeinflussen.

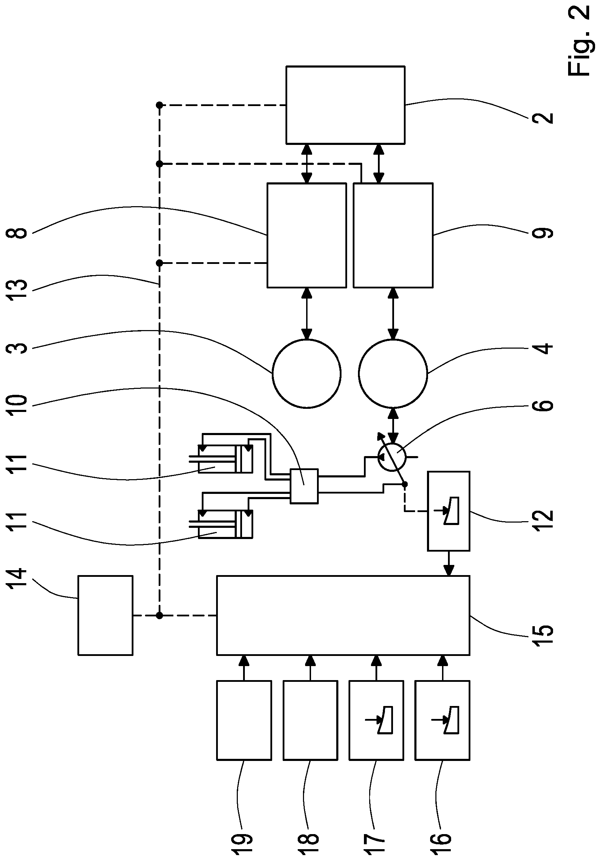

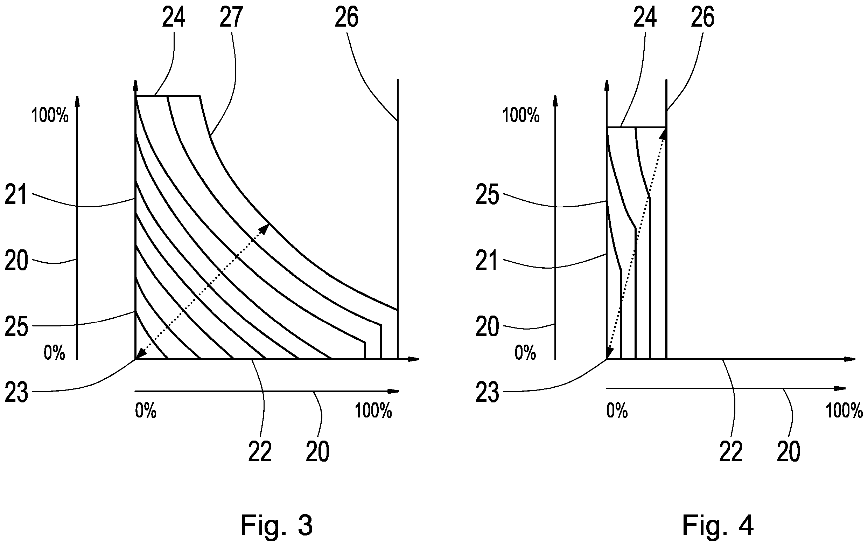

Fig. 3:
In der Recheneinheit 15 der Fig. 2 sind Kennlinien abgespeichert, welche einen schnellen Fahrbereich und einen langsamen Fahrbereich abbilden. Das in Fig. 3 dargestellte Diagramm bildet den schnellen Fahrbereich ab. Damit der Fahrer des Radladers bei Einfahrt in den Haufen bis zum Stillstand des Fahrzeugs im Stillstand des Fahrzeugs das Drehmoment an den Fahrzeugrädern steuern kann, ist es notwendig, das Drehmoment des ersten elektrischen Motors in Abhängigkeit der Stellung des Fahrpedals zu begrenzen. Dadurch ist es möglich, zu jeder Stellung des Fahrpedals im Stillstand des Fahrzeugs an den Fahrzeugrädern ein definiertes Drehmoment zu erzeugen, wodurch der Fahrer das Fahrzeug bis an die Traktionsgrenze über das Fahrpedal steuern kann. Hierfür wird die Stellung des Fahrpedals mittels eines Sensors ermittelt, wobei bei nichtbetätigtem Fahrpedal der Sensor ein Signal ausgibt, welches dem Fahrpedalsignal 20 von 0% entspricht, und bei vollbetätigtem Fahrpedal der Sensor ein Signal ausgibt, welches dem Fahrpedalsignal 20 von 100% entspricht. Die Kennlinien der Fig. 3 sind in einem kartesischen Koordinatensystem eingetragen, wobei die Koordinate das Drehmoment 21 des ersten elektrischen Motors abbildet und die Abszisse die Drehzahl 22 des ersten elektrischen Motors abbildet. Durch Bilden von Schnittpunkten einzelner Kennlinien, welche beispielsweise gleichmäßig verteilt sein können, einmal bei der Drehzahl 0 vom Drehmoment 0 23 bis zum maximalen Drehmoment 24 über dem Fahrpedalsignal 20 = 100% werden Schnittpunkte 25 erzeugt, welche einer definierten Pedalstellung des Fahrpedals zugeordnet sind. Es besteht beispielsweise die Möglichkeit, mit einer bestimmten Anzahl an Kennlinien, beispielsweise 0%, 25%, 50%, 75% und 100%, diese Schnittpunkte zu erzeugen. Die lineare Verteilung ist nur beispielhaft, es besteht auch die Möglichkeit, eine nichtlineare Verteilung zu erzeugen. Die Zwischenwerte zwischen den Kennlinien werden anschließend interpoliert. Somit ist es möglich, bei Stillstand des Fahrzeugs zu jeder Fahrpedalstellung ein Drehmoment an den Fahrzeugrädern zu erzeugen. Bei der Drehzahl 22 des ersten elektrischen Motors wird in gleicher Weise verfahren, wodurch ebenfalls Schnittpunkte mit der Abszisse bei 0 Drehmoment erzeugt werden. Damit das Fahrzeug nicht über die maximal zulässige Geschwindigkeit kommt, wird die Drehzahl 22 des ersten elektrischen Motors auf eine Maximaldrehzahl 26 begrenzt. Dadurch ist es möglich, mittels des Fahrpedals bei sehr geringem oder keinem Drehmoment die Geschwindigkeit des Fahrzeugs einzuregeln. Anschließend wird das Diagramm so erstellt, dass zuerst die maximal mögliche Leistung als Funktion der Fahrpedalstellung aufgetragen wird. Die maximale Leistung ist in der Linie 27 dargestellt. Bei den weiteren Linien werden die Schnittpunkte der Ordinate mit den Schnittpunkten der Abszisse verbunden.

Das dargestellte Diagramm zeigt nur einen Quadranten eines möglichen Betriebs des ersten elektrischen Motors. In diesem Quadranten ist der Zugbereich und die Drehrichtung vorwärts dargestellt. Ein ähnlicher oder gespiegelter Kennlinienverlauf kann auch in der entgegengesetzten Drehrichtung rückwärts verwendet werden. Im Schubbetrieb wird vorteilhaft ein begrenztes Drehmoment vorgegeben, um ein gewohntes Ausrollverhalten beziehungsweise Bremsverhalten darzustellen. Bei heutigen verbrennungsmotorischen Antrieben ist das Bremsmoment deutlich kleiner als das Antriebsmoment. Der Antrieb sollte immer nur dann in den Schubbetrieb gehen, wenn der Schnittpunkt der Drehzahl bei 0 Drehmoment und entsprechender Pedalstellung überschritten wird. Das generierte Bremsmoment soll dann mit steigender Drehzahl in einem Gradienten bis auf ein definiertes Niveau ansteigen und auch bei weiter steigender Drehzahl nahezu konstant bleiben. Das maximale Bremsmoment kann konstant und unabhängig von der Pedalstellung vorgegeben werden oder mit geringer Pedalbetätigung höher und bei starker Pedalbetätigung geringer vorgegeben sein.

Es besteht die Möglichkeit, das Fahrzeug auch nur mit einem Fahrbereich auszubilden, wobei dann das Diagramm für den schnellen Fahrbereich verwendet wird. Bei Verwendung eines zusätzlich langsamen Fahrbereichs wird ein zusätzliches Diagramm entsprechend der Fig. 4 ausgebildet.

Fig. 4:
Der in Fig. 4 dargestellte langsame Fahrbereich wird für Positioniermanöver, beispielsweise Arbeiten mit einer Ladegabel, mit einer feinen Fahrpedalauflösung benötigt. Der Begriff feine Fahrpedalauflösung bedeutet hierbei, dass die Endgeschwindigkeit im langsamen Fahrbereich erst bei vollbetätigtem Fahrpedal erreicht wird und nicht wie im schnellen Fahrbereich bereits im ersten Drittel der Betätigung des Fahrpedals. Die Schnittpunkte 25 des jeweils maximalen Drehmoments bei der Drehzahl 0 sind hierbei identisch mit den Schnittpunkten 25 des schnellen Fahrbereichs der Fig. 3. Die Maximaldrehzahl 26 ist jedoch gegenüber der Maximaldrehzahl 26 der Fig. 3 deutlich reduziert. Die Maximaldrehzahl 26 der Fig. 4 wird jedoch auch erst bei 100% des Fahrpedalsignals 20 erreicht. Dadurch sind die Schnittstellen der jeweiligen maximalen Drehzahl des ersten Fahrmotors bei Drehmoment 0 auf kleinere Drehzahlen skaliert.

Fig. 5:
Um auch eine Inchfunktion darstellen zu können, wird das Signal des Bremspedals zusätzlich zum Signal des Fahrpedals verarbeitet. Dadurch ist es möglich, das Fahrzeug im Inchbetrieb zu betreiben, das heißt, die Leistung und somit das Drehmoment und die Drehzahl vom ersten elektrischen Motor zu reduzieren und die Leistung, somit die Drehzahl und das Drehmoment, für den zweiten elektrischen Motor und somit die Pumpe 6 der Fig. 2 für die Arbeitsausrüstung, somit das Lenken und/oder Heben und Drehen der Schaufel, zu erhöhen. Hierfür wird die Bremspedalstellung über einen Sensor, vorzugsweise einen analogen Sensor, erfasst und als Vorgabe für die Reduzierung der Drehzahl und des Drehmoments, somit der Leistung des ersten elektrischen Motors für den Fahrantrieb, verwendet werden.

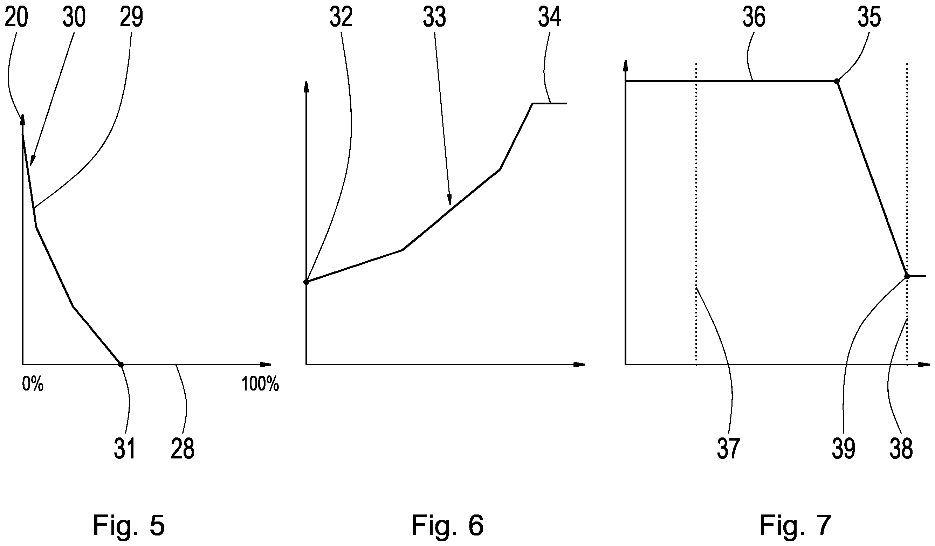

Auf der Ordinate der Fig. 5 ist hierfür der aktuelle Wert des Signals 20 des Fahrpedals zwischen 0 und 100% aufgeführt und auf der Abszisse ist das Signal des Bremspedals 28 von 0 bis 100% aufgeführt. Wird das Bremspedal nicht betätigt, so wird das Signal des Fahrpedals nicht reduziert. Bei voll durchgedrücktem Fahrpedal, somit bei 100%, und nicht betätigtem Bremspedal bleibt das Signal des Fahrpedals 20 somit gleich. Je mehr das Bremspedal betätigt wird, desto mehr reduziert sich das Signal des Fahrpedals. Im ersten Teil 29 der Bremsbetätigung wird die Betriebsbremse nicht aktiviert, jedoch die Leistung für den ersten elektrischen Motor reduziert, indem anhand der Kennlinie 30 das Signal des Fahrpedals reduziert wird und somit der erste elektrische Motor mit einem geringeren Sollsignal angesteuert wird. Somit wird die Drehzahlvorgabe für den ersten elektrischen Motor bei gleichbleibend gedrücktem Fahrpedal und steigend gedrücktem Bremspedal immer weiter reduziert. Die Kennlinie 30 ist hierbei so ausgestaltet, dass bei voll durchgedrücktem Fahrpedal sich das Signal des Fahrpedals bereits stark erniedrigt, wenn das Bremspedal nur wenig gedrückt ist. Bei nur gering betätigtem Fahrpedal muss das Bremspedal sehr weit gedrückt werden, um eine Reduzierung des Signals des Fahrpedals zu erreichen. Ab einem zuvor definierten Betätigungsweg des Fahrpedals wird zusätzlich die Betriebsbremse aktiviert. Im Punkt 31 schneidet die Kennlinie 30 die Abszisse, welches bedeutet, dass das Fahrpedal nicht betätigt ist, wobei dieser Punkt 31 entweder mit dem Betätigungsweg, bei welchem die Betriebsbremse betätigt wird, zusammenfällt, oder kurz nach diesem Betätigungsweg des Bremspedals gewählt wird, um eine entsprechende Überlappung zu gewährleisten. Indem durch die Kennlinie 30 das Fahrpedalsignal entsprechend in Abhängigkeit der Betätigung des Bremspedals reduziert wird, ergibt sich eine veränderte Ansteuerung des ersten elektrischen Motors in Bezug auf seine Drehzahl und sein Drehmoment.

Fig. 6:
Um jedoch nicht nur den ersten elektrischen Motor in Abhängigkeit der Betätigung des Bremspedals verändert anzusteuern, ist es notwendig, auch den zweiten elektrischen Motor anzusteuern. Hierfür weist das Fahrzeug einen Multifunktionshebel in der Fahrerkabine auf, mittels welchem die Arbeitsausrüstung beispielsweise die Hub- und Schaufelbewegung steuerbar ist. Die in Fig. 6 dargestellte Kennlinie wird für den zweiten elektrischen Motor mit einem oder mehreren Pumpen mit konstantem Hubvolumen verwendet. Bei dieser Ausgestaltung wird das Fördervolumen ausschließlich durch die Drehzahl des zweiten elektrischen Motors bestimmt. Bei Verwendung von mehreren Pumpen kann beispielsweise eine Pumpe für die Knicklenkung des Radladers und eine zweite Pumpe für die Arbeitsausrüstung vorhanden sein. Die direkte Ansteuerung des zweiten elektrischen Motors erlaubt durch die Steuerung der Drehzahl des zweiten elektrischen Motors, die Fördermenge an die benötigte Arbeitssituation anzupassen. Bei herkömmlichen Radladern mit einem Verbrennungsmotor ist die Pumpe direkt verbunden mit dem Verbrennungsmotor, wodurch eine freie Ansteuerung der Pumpe nicht möglich ist.

Die Ansteuerung der Drehzahl des zweiten elektrischen Motors soll in Abhängigkeit des Fahrpedalsignals und in Abhängigkeit der Drehzahl des ersten elektrischen Motors erfolgen. Auf der Ordinate in Fig. 6 ist deshalb die Drehzahl des zweiten elektrischen Motors aufgezeigt und in der Abszisse ist die Betätigung des Fahrpedals beziehungsweise das Fahrpedalsignal aufgezeigt. Im Punkt 32 wird das Fahrpedal nicht betätigt, wodurch sich das Fahrzeug im Stillstand befindet. Da in diesem Stillstand jedoch Lenkbewegungen möglich sein müssen, wird der zweite elektrische Motor mit einer Mindestdrehzahl wie im Punkt 32 ersichtlich angesteuert. Mit steigendem Fahrpedalsignal wird über die Kennlinie 33 die Drehzahlvorgabe für den zweiten elektrischen Motor bis zur Maximaldrehzahl 34 erhöht. Zur Begrenzung der Maximaldrehzahl 34 des zweiten elektrischen Motors wird eine zweite Abhängigkeit zur Drehzahl des ersten elektrischen Motors verwendet. Befindet sich der erste elektrische Motor auf kleiner Drehzahl, bewegt sich somit das Fahrzeug bei geringer Geschwindigkeit, muss die Drehzahl des ersten elektrischen Motors bis zur Maximaldrehzahl möglich sein. Bei höherer Drehzahl des ersten elektrischen Motors und somit höherer Fahrgeschwindigkeit des Fahrzeugs besteht die Möglichkeit, die Drehzahl des zweiten elektrischen Motors zu reduzieren. Dies ist darin begründet, dass die Hydraulik für die Schaufel und das Hubwerk bei höheren Fahrgeschwindigkeiten nicht schnell bewegt werden müssen. Wesentlich ist jedoch, dass eine Mindestdrehzahl für die Lenkung erhalten bleibt. Durch die Absenkung der Drehzahl des zweiten elektrischen Motors in Abhängigkeit der Drehzahl des ersten elektrischen Motors und somit in Abhängigkeit der Fahrgeschwindigkeit wird der Wirkungsgrad des Systems erhöht. Die Absenkung der Drehzahl des zweiten elektrischen Motors in Abhängigkeit der Drehzahl des ersten elektrischen Motors ist in Fig. 7 dargestellt.

Fig. 7:
Die Drehzahl des zweiten elektrischen Motors ist auf der Ordinate aufgezeichnet und die Drehzahl des ersten elektrischen Motors ist auf der Abszisse aufgeführt. Bis zum Punkt 35 befindet sich das Fahrzeug noch bei geringen Fahrgeschwindigkeiten und die maximal mögliche Drehzahl des zweiten elektrischen Motors, welche durch die Kennlinie 36 dargestellt ist, wird nicht reduziert. Die Linie 37 zeigt die maximale Drehzahl des ersten elektrischen Motors beziehungsweise die maximale Fahrgeschwindigkeit im langsamen Fahrbereich und die Linie 38 zeigt die maximale mögliche Drehzahl des ersten elektrischen Motors beziehungsweise die maximale Fahrgeschwindigkeit des Fahrzeugs im schnellen Fahrbereich. Die Drehzahl des zweiten elektrischen Motors wird bis zum Punkt 39 reduziert, um eine ausreichende Fördermenge für die Lenkung zu gewährleisten.

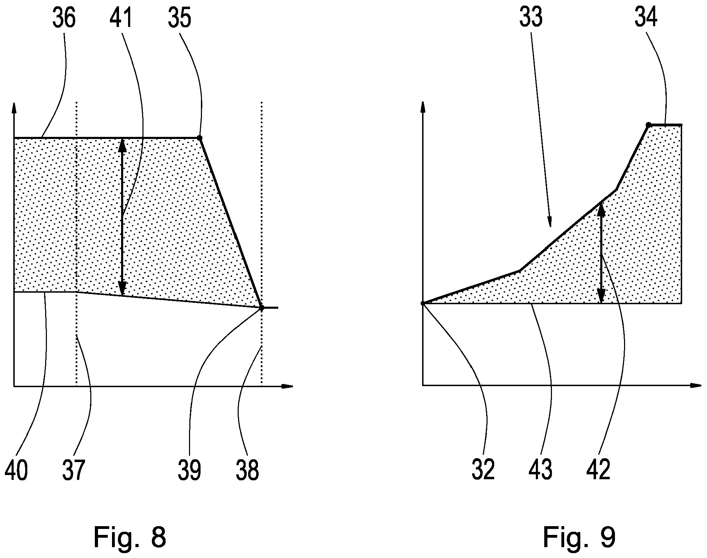

Fig. 8:
Bei Verwendung von zusätzlichen Sensoren entweder direkt am Hubwerk beziehungsweise der Schaufel oder am Multifunktionshebel, mittels welchem sich das Hubwerk und die Schaufel ansteuern lässt, lässt sich die Drehzahl des zweiten elektrischen Motors entsprechend dem Bedarf weiter anpassen. Hierbei bleiben die Abhängigkeiten der Drehzahlvorgabe für den zweiten elektrischen Motor zur Fahrpedalstellung und zur Drehzahl des ersten elektrischen Motors bestehen. Zusätzlich wird jedoch die Information der Sensoren der Betätigung des Hubwerks und der Schaufel verwendet. Diese Sensoren liefern entsprechend der Betätigung ein Signal, welches beispielsweise ein proportionales Signal sein kann. Diese Sensorsignale werden kalibriert und interpretiert. Beide Signale können Werte von -100% bis +100% annehmen, wobei für die Hubbewegung das Sensorsignal für maximales Absenken beispielsweise auf -100% kalibriert sein kann und für das maximale Anheben der Hubbewegung auf 100% kalibriert sein kann. Für die Schaufelbewegung bedeutet ein Sensorsignal von -100% ein maximales Auskippen der Schaufel und ein Sensorsignal von +100% ein maximales Einkippen der Schaufel. Wird der Multifunktionshebel nicht betätigt, somit keine Bewegung der Arbeitsausrüstung beziehungsweise des Hubwerks und der Schaufel angefordert, liefern die Sensoren jeweils ein Signal von 0%. Für die Drehzahlvorgabe des zweiten elektrischen Motors soll jeweils der größte Betrag der beiden Sensorsignale verwendet werden. Fig. 8 zeigt die Abhängigkeit der Drehzahlvorgabe für den zweiten elektrischen Motor von der Drehzahl des ersten elektrischen Motors und dem Signal der Sensoren der Arbeitsausrüstung. Auf der Ordinate ist hierbei die Drehzahl des zweiten elektrischen Motors aufgetragen und auf der Abszisse ist die Drehzahl des ersten elektrischen Motors aufgetragen. Die Linie 40 zeigt eine Anhebung der Drehzahl des zweiten elektrischen Motors bei gleichzeitiger Reduzierung der Drehzahl des ersten elektrischen Motors. Die Linie 37 ist hierbei die maximal erreichbare Drehzahl des ersten elektrischen Motors im langsamen Fahrbereich und die Linie 38 ist hierbei die maximal erreichbare Drehzahl des ersten elektrischen Motors im schnellen Fahrbereich. Die Kennlinie 36 mit den Punkten 35 und 39 entspricht der Kennlinie 36 der Fig. 7. Diese Drehzahl wird nun je nach Sensorsignal der Hubausrüstung bis zur Linie 40 reduziert. Dies ist mit dem Pfeil 41 dargestellt.

Fig. 9:
In Fig. 9 wird die Reduzierung der Drehzahl des zweiten elektrischen Motors in Abhängigkeit der Sensoren der Arbeitsausrüstung wie in Fig. 7 beschrieben dargestellt. Dabei entspricht das Diagramm dem Diagramm nach Fig. 6 und mit dem Pfeil 42 ist dargestellt, dass sich die Drehzahl des zweiten elektrischen Motors in Abhängigkeit der Signale der Sensoren der Arbeitsausrüstung reduziert. Es besteht nur die Möglichkeit, die Drehzahl des zweiten elektrischen Motors bis zur Linie 43 zu reduzieren.

### Bezugszeichen

- 1: Radlader
- 2: Batterie
- 3: erster elektrischer Motor
- 4: zweiter elektrischer Motor
- 5: Fahrzeugräder
- 6: Pumpe
- 7: Hubwerk
- 8: Leistungselektronik
- 9: Leistungselektronik
- 10: Ventile
- 11: Aktuatoren
- 12: Sensor
- 13: Leitung
- 14: Display
- 15: Recheneinheit
- 16: Bremspedal
- 17: Fahrpedal
- 18: Parkbremse
- 19: Multifunktionshebel
- 20: Fahrpedalsignal
- 21: Drehmoment
- 22: Drehzahl
- 23: Drehmoment 0
- 24: maximales Drehmoment
- 25: Schnittpunkt
- 26: Maximaldrehzahl
- 27: Linie
- 28: Bremspedalsignal
- 29: erster Teil
- 30: Kennlinie
- 31: Punkt
- 32: Punkt
- 33: Kennlinie
- 34: Maximaldrehzahl
- 35: Punkt
- 36: Kennlinie
- 37: Kennlinie
- 38: Linie
- 39: Punkt
- 40: Linie
- 41: Pfeil
- 42: Pfeil
- 43: Linie

## Patentansprüche

1. Arbeitsmaschine umfassend eine Arbeitsausrüstung (11) und Fahrzeugräder (5), und einen Antrieb, wobei der Antrieb eine Recheneinheit aufweist, mittels welcher ein erster elektrischer Motor (3) zum ausschließlichen Antrieb der Fahrzeugräder (5) und ein zweiter elektrischer Motor (4) zum Antrieb der Arbeitsausrüstung (11) ansteuerbar ist, wobei der zweite elektrische Motor (4) mindestens eine hydraulische Pumpe mit einem verstellbaren Hubvolumen antriebt und mittels eines Sensors das Hubvolumen der Pumpe erfassbar ist, wobei die Recheneinheit dieses Hubvolumen zur Ansteuerung des zweiten elektrischen Motors (4) verarbeitet, **dadurch gekennzeichnet, dass** die Drehzahl des zweiten elektrischen Motors (4) in Abhängigkeit der Drehzahl des ersten elektrischen Motors (3) begrenzt wird.

2. Arbeitsmaschine nach Anspruch 1, **dadurch gekennzeichnet, dass** die Pumpe als eine Load-Sensing Pumpe ausgebildet ist.

3. Arbeitsmaschine nach Anspruch 1, **dadurch gekennzeichnet, dass** das der Sensor ein Signal erzeugt, welches der Recheneinheit zugeführt wird.

4. Arbeitsmaschine nach Anspruch 1, **dadurch gekennzeichnet, dass** der zweite elektrische Motor (4) in seiner Drehzahl erhöht wird, wenn die Pumpe bereits auf nahezu maximalem Hubvolumen angesteuert ist.

5. Arbeitsmaschine nach Anspruch 1, **dadurch gekennzeichnet, dass** der zweite elektrische Motor (4) eine zuvor definiert Mindestdrehzahl nicht unterschreitet

6. Arbeitsmaschine nach Anspruch 1, **dadurch gekennzeichnet, dass** die Geschwindigkeit der Änderung der Drehzahl des zweiten elektrischen Motors (4) in Abhängigkeit der Geschwindigkeit der Änderung des Hubvolumens der Pumpe erfolgt.

## Claims

1. Working machine comprising working equipment (11) and vehicle wheels (5), and a drive, wherein the drive has a computing unit by means of which a first electric motor (3) for exclusively driving the vehicle wheels (5) can be activated and a second electric motor (4) for driving the working equipment (11) can be activated, wherein the second electric motor (4) drives at least one hydraulic pump having an adjustable swept volume, and the swept volume of the pump can be detected by means of a sensor, wherein the computing unit processes this swept volume for activating the second electric motor (4), **characterized in that** the speed of the second electric motor (4) is limited in dependence on the speed of the first electric motor (3).

2. Working machine according to Claim 1, **characterized in that** the pump is designed as a load-sensing pump.

3. Working machine according to Claim 1, **characterized in that** the sensor generates a signal which is supplied to the computing unit.

4. Working machine according to Claim 1, **characterized in that** the second electric motor (4) is increased in its speed when the pump has already been activated to a virtually maximum swept volume.

5. Working machine according to Claim 1, **characterized in that** the second electric motor (4) does not fall below a predefined minimum speed.

6. Working machine according to Claim 1, **characterized in that** the rate of change of the speed of the second electric motor (4) occurs in dependence on the rate of change of the swept volume of the pump.

## Revendications

1. Machine de travail, comprenant un équipement de travail (11) et des roues de véhicule (5), ainsi qu'un dispositif d'entraînement, le dispositif d'entraînement présentant une unité de calcul au moyen de laquelle un premier moteur électrique (3) peut être piloté pour entraîner exclusivement les roues de véhicule (5) et un deuxième moteur électrique (4) peut être piloté pour entraîner l'équipement de travail (11), le deuxième moteur électrique (4) entraînant au moins une pompe hydraulique ayant une cylindrée réglable, et la cylindrée de la pompe pouvant être détectée au moyen d'un capteur, l'unité de calcul traitant cette cylindrée pour le pilotage du deuxième moteur électrique (4),
**caractérisée en ce que** la vitesse de rotation du deuxième moteur électrique (4) est limitée en fonction de la vitesse de rotation du premier moteur électrique (3) .

2. Machine de travail selon la revendication 1, **caractérisée en ce que** la pompe est réalisée sous forme de pompe à détection de charge.

3. Machine de travail selon la revendication 1, **caractérisée en ce que** le capteur génère un signal qui est amené à l'unité de calcul.

4. Machine de travail selon la revendication 1, **caractérisée en ce que** la vitesse de rotation du deuxième moteur électrique (4) est augmentée si la pompe est déjà pilotée presque jusqu'à la cylindrée maximale.

5. Machine de travail selon la revendication 1, **caractérisée en ce que** le deuxième moteur électrique (4) ne passe pas sous une vitesse de rotation minimale définie au préalable.

6. Machine de travail selon la revendication 1, **caractérisée en ce que** la vitesse de la variation de la vitesse de rotation du deuxième moteur électrique (4) a lieu en fonction de la vitesse de la variation de la cylindrée de la pompe.
